# EUROPÄISCHE PATENTSCHRIFT

(11) **EP 1 493 830 B1**
(45) Veröffentlichungstag und Bekanntmachung des Hinweises auf die Patenterteilung: **23.08.2006**
(21) Anmeldenummer: 04450134.4
(22) Anmeldetag: 29.06.2004
(51) Int. Cl.: C22B 7/02, C22B 7/04, C21C 5/54, C21C 7/00, C22B 34/32

(54) **Schmelz-Reduktionsverfahren zum Aufbereiten von Schlacken und Stäuben aus der Edelstahlherstellung**
Smelt reduction method for processing slags and dusts from stainless steelmaking
Procédé de fusion et réduction pour le retraitement de laitiers et poussières provenant de l'élaboration des aciers inoxydables

(30) Priorität: 30.06.2003 AT 9962003
(43) Veröffentlichungstag der Anmeldung: 05.01.2005
(73) Patentinhaber: Patco Engineering GmbH, 6300 Zug (CH)
(72) Erfinder: Pestalozzi, andreas, 7250 Klosters (CH)
(74) Vertreter: Haffner, Thomas M.

(56) Entgegenhaltungen:
- WO-A-00/65108
- WO-A-96/34989
- US-B1- 6 395 054
- DATABASE WPI Section Ch, Week 197811 Derwent Publications Ltd., London, GB; Class M24, AN 1978-20982A XP002301645 & SU 557 119 A (UKR FERR METAL RES) 2. Juli 1977 (1977-07-02)
- PATENT ABSTRACTS OF JAPAN Bd. 1997, Nr. 07, 31. Juli 1997 (1997-07-31) & JP 9 087720 A (KAWASAKI STEEL CORP), 31. März 1997 (1997-03-31)
- DATABASE WPI Section Ch, Week 198509 Derwent Publications Ltd., London, GB; Class M26, AN 1985-053011 XP002301646 & JP 60 009815 A (NIPPON STEEL CORP) 18. Januar 1985 (1985-01-18)

## Beschreibung

Die Erfindung bezieht sich auf ein Verfahren zum Aufbereiten von Schlacken und Stäuben aus der Edelstahlherstellung zu hydraulisch aktiven Zementzuschlagstoffen und Vorlegierungen zur Edelstahlerzeugung.

Für Stahlschlacken wurde in der WO 00/65108 bereits vorgeschlagen, die flüssigen Schlacken bzw. Eisenträger, wie beispielsweise Elektroofen-, Konverterschlacken, Stäube aus der Stahlherstellung, Walzwerkzunder oder sekundär metallurgische Rückstände mit Chromerzen oder chrom- und/oder nickelhältigen Stäuben umzusetzen, wobei Badtemperaturen zwischen 1600°C und 1800°C bevorzugt eingehalten werden sollten. Zu diesem Zwecke wurde bei der Aufarbeitung derartiger Stahlschlacken ein kohlenstoffhaltiges Eisenbad vorgelegt, wobei durch Reduktion eine hochwertige Ferrochromlegierung aus den Chromerzen bzw. den chrom- und/oder nickelhältigen Stäuben gewonnen werden konnte, wodurch die Wirtschaftlichkeit des Verfahrens wesentlich verbessert wird.

Die vorliegende Erfindung bezieht sich nun unmittelbar auf Schlacken und Stäube aus der Edelstahlherstellung und damit auf spezielle Stahlschlacken. Entsprechend der Zusammensetzung derartiger Ausgangsprodukte, müssen Chromerze bzw. chrom- und/oder nickelhältige Stäube nicht mehr zugesetzt werden, wenn es bei der Aufarbeitung von Schlacken und Stäuben aus der Edelstahlherstellung um die Rückgewinnung der Legierungselemente des jeweiligen Edelstahles geht. Die Wirtschaftlichkeit des Verfahrens lässt sich aber beispielsweise durch Zusatz von Cr-, V-, Mo-, Nb- Erzen bzw. Konzentrationen weiter verbessern. Wie bereits für Stahlschlacken vorgeschlagen, gelingt eine derartige Rückreduktion von relativ unedlen Legierungsbestandteilen nur bei relativ hohen Temperaturen, wobei bei Badtemperaturen von über 1600°C Schlackenendchromgehalte von weit unter 500ppm erzielbar sind, wobei Chrom nahezu quantitativ in das kohlenstoffhältige Eisenbad reduziert wird. Wie in der WO 00/65105 im Zusammenhang mit Stahlschlacken bereits ausgeführt, kann das erforderliche hohe Temperaturniveau für die Rückreduktion von Chrom aus Chromstäuben nur durch eine entsprechende Nachverbrennung gewährleistet werden, wobei weiters ein entsprechend rascher Stoffaustausch gewährleistet werden muss.

Mit der vorliegenden Erfindung soll dieses bekannte Verfahren für Edelstahlschlacken bzw. Stäube weiter verbessert werden, wobei insbesondere die Gefahr einer Rückoxidation von Legierungselementen bei der zur Erzielung der hohen Temperaturen erforderlichen Nachverbrennung verhindert werden soll.

Die Erfindung zielt somit darauf ab, die Edelstahllegierungselemente weitestgehend quantitativ aus der Schlacke in ein Metallbad zu reduzieren, sodass unmittelbar Schlacken gebildet werden können, welche als hydraulisch aktive Zementzuschlagstoffe ohne Umweltbelastung eingesetzt werden können.

Zur Lösung dieser Aufgabe besteht das erfindungsgemäße Verfahren im Wesentlichen darin, dass der CO₂-Partialdruck über dem Bad kontrolliert wird und unter einem temperaturabhängigen Maximalwert gehalten wird, wobei der CO₂-Partialdruck-Maximalwert 15% des Gesamtdruckes bei 1500° C und 20% des Gesamtdruckes bei 1800° C nicht übersteigen soll. Erfindungsgemäß wurde somit erkannt, dass thermische Energie erforderlichenfalls weitgehend in Form von elektrischer Energie bzw. induktiv eingebracht und/oder entsprechende Brennstoffe gewählt werden müssen, um zu verhindern, dass das bei den entsprechend hohen Temperaturen bei der Nachverbrennung gebildete CO₂ wiederum oxidierend wirkt und zu einer neuerlichen Verschlackung der unedleren Legierungselemente führt. Erfindungsgemäß wird diese Rückverschlackung durch eine Kontrolle des CO₂- Partialdruckes und eine entsprechende Begrenzung des Maximalwertes gelöst, wobei sich gezeigt hat, dass die Gefahr einer Rückoxidation durch CO₂ bei höheren Temperaturen geringer wird, da überraschender Weise die entsprechend heißeren Legierungsmetalle sich edler verhalten als bei niedereren Temperaturen. In diesem Sinne wird erfindungsgemäß der CO₂-Partialdruck-Maximalwert bei Temperaturen von 1500°C auf 15% des Gesamtdruckes in der Gasphase beschränkt, wohingegen der entsprechende Grenzwert bzw. CO₂-Partialdruck-Maximalwert bei 1800°C 20% des Gesamtdruckes betragen darf, um sicher zu verhindern, dass eine Rückoxidation in die Schlacke erfolgt.

Mit Vorteil wird das erfindungsgemäße Verfahren so durchgeführt, dass das kohlenstoffhältige Fe-Bad induktiv beheizt wird und im Gasraum eine Nachverbrennung des gebildeten CO zu CO₂ unter Berücksichtigung der maximalen CO₂-Partialdrücke vorgenommen wird. Durch die induktive Beheizung des kohlenstoffhältigen Eisenbades kann ein erheblicher Teil der erforderlichen ther-mischen Energie ohne CO₂ Bildung aufgebracht und die Nachverbrennung entsprechend geführt werden, um den Wärmebedarf ergänzend zu decken.

Um sicherzustellen, dass die entsprechend gereinigten und von Edelstahllegierungselementen freien Schlacken ohne Bedenken als hydraulisch aktive Zementzuschlagstoffe eingesetzt werden können, wird mit Vorteil das Verfahren so geführt, dass die Basizität (CaO/SiO₂) der gebildeten Schlacke durch SiO₂-Zusatz auf Werte zwischen 1 und 1,6 und der Al₂O₃-Gehalt auf Werte nach der Reduktion zwischen 6 und 18 Gew.% eingestellt wird.

Insgesamt wird somit, wie bei den bekannte Verfahren zur Schlackenaufbereitung, mit einem sogenannte Eisenbadreaktor gearbeitet, wobei im Regulus Vanadin, Chrom und andere Legierungsmetalle vor allem in der Karbidform vorliegen, wohingegen beispielsweise Nickel sich in der kohlenstoffhältigen Resteisenschmelze unmittelbar löst. Bei induktiver Erhitzung auf eine Eisenbadtemperatur von über 1500°C wird während des Reduktionsprozesses Kohlenstoff verbraucht und muss über Lanzen, Unterbaddüsen oder dergleichen ergänzt werden, wodurch gleichzeitig eine entsprechende Turbulenz an der Grenzfläche zwischen Schlacke und Eisenschmelze, und damit eine hohe Reaktionsfläche, erzielt werden kann. Um die entsprechende Temperatursteigerung auf max. 1800°C zu gewährleisten, kann das bei der Reduktion gebildete Kohlenmonoxid zumindest teilweise entsprechend den Vorgaben für den Partialdruck-Maximalwert zu CO₂ nachverbrannt werden. In diesem Sinne kann auch in den Eisenbadreaktornachverbrennungsraum Brennstoff eingespritzt werden und teilverbrannt werden, um die entsprechenden CO₂-Partialdruck-Maximalwerte zu gewährleisten. Die Partialdrucke der jeweiligen Verbrennungsprodukte H₂O bzw. CO₂ im Falle einer Teilnachverbrennung bedürfen im Hinblick auf das von der Ausgangsanalyse abhängige Reduktionspotential der reduzierten Metalle, wie beispielsweise Nickel, Chrom, Vanadin oder dergleichen, einer präzisen Kontrolle. Bei 1680°C darf z.B. der CO₂-Partialdruck keinesfalls größer als 18% des Gesamtdruckes betragen, um eine Rückverschlackung zu verhindern. Je unedler die jeweiligen Metalle desto niedriger ist der jeweils zulässige CO₂- Partialdruck, wobei unedle Metalle bei entsprechend höheren Temperaturen sich edler verhalten. In aller Regel wird der nicht durch partielle Verbrennung oder Nachverbrennung eingebrachte Teil der Energie zwischen 40% und 60% des Gesamtwärmebedarfs betragen, wobei diese Werte von der jeweiligen Edelstahlschlackenanalyse abhängig sind.

Wesentlich für die Verwendbarkeit als hydraulisch aktiver Zementzuschlagstoff ist in diesem Zusammenhang vor allem die Einstellung der Schlackenbasizität auf Werte zwischen 1 und 1,6 sowie die Einstellung des Al₂O₃-Gehaltes nach der Reduktion auf Werte zwischen 6 und 18 Gew.%. Entsprechend günstige Parameter für die Erzielung hoher Frühfestigkeit und hoher Endfestigkeit lassen sich durch entsprechende Kontrolle weiterer Schlackenbestandteile erzielen. Insbesondere ist es besonders vorteilhaft das Verfahren so durchzuführen, dass der MgO-Gehalt der Schlacken nach der Reduktion unter 20 Gew.%, der TiO₂-Gehalt unter 2 Gew.% und der FeₓO_{y}-Gehalt unter 2 Gew.% gehalten wird. Bei entsprechender Einstellung des CO₂-Partialdruck-Maximalwertes lässt sich der Gehalt an Schwermetallen in der Schlacke nach der Reduktion weit unter 800ppm halten, sodass beim Einsatz derartiger hydraulisch aktiver Zementzuschlagstoffe keine nennenswerte Beeinträchtigung der Umwelt erfolgt. Übliche Nachverbrennungsverfahren, wie sie bisher Verwendung finden, führen zu CO₂-Gehalten von etwa 80 Vol.%, wobei zu berücksichtigen ist, dass das bei den hohen Temperaturen gebildete CO₂ sich nicht mehr mit dem Badkohlenstoff ins Gleichgewicht setzt und somit eine, dem Boudouard'schen Gleichgewicht entsprechende Verteilung zwischen CO und CO₂ nicht eintritt.

Bei der Aufarbeitung von Halogeniden, und insbesondere fluoridhältigen Schmelzen, wird mit Vorteil so vorgegangen, dass die Schmelzen durch Aufblasen oder Einblasen von Wasserdampf oder wasserstoffhältigen Brennstoffen und Verbrennungssauerstoff unter Bildung von Halogenwasserstoff umgesetzt werden, wobei intermediär gebildetes CaO mit sauren Bestandteilen der Schlacke wie Al₂O₃ oder SiO₂ neutralisiert wird.

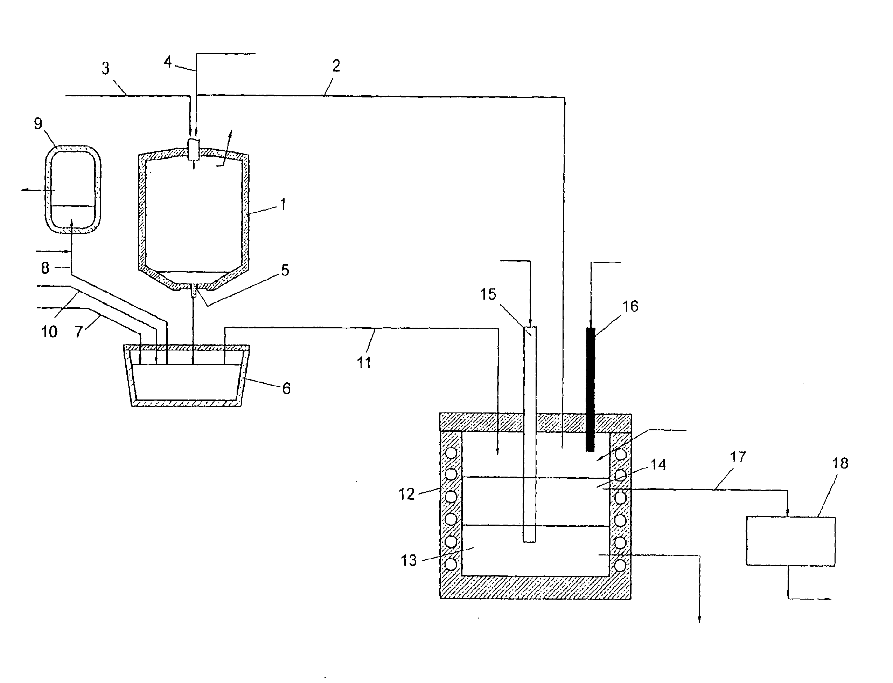

Das erfindungsgemäße Verfahren wird nachfolgend anhand einer in der Zeichnung schematisch dargestellten Einrichtung zur Durchführung des erfindungsgemäßen Verfahrens näher erläutert. In der Zeichnung ist mit 1 ein Einschmelzzyklon bzw. ein Schmelzbrenner bezeichnet, welchem die Edelstahlstäube und additive Zusatzbrennstoffe und Verbrennungssauerstoff aufgegeben werden. Verbrennungsabgase entstehen in diesem Brenner bei Temperaturen zwischen 1600°C und 1700°C und werden über die Leitung 2 abgezogen, wohingegen die Aufgabe der Ausgangsmaterialien schematisch über die Leitungen 3 und 4 angedeutet ist.

Die geschmolzene Schlacke gelangt über einen Bodenauslass 5 in eine Pfanne 6. Sofern hier ein hoher Fluoridgehalt vorliegt, erfolgt das bevorzugte Einblasen von Wasserdampf oder wasserstoffhaltigen Brennstoffen, welches über die Leitung 7 erfolgt. In der Pfanne 6 wird hiebei CaF₂ mit H₂O zu CaO und 2HF umgesetzt, wobei das intermediär gebildete CaO rasch mit den sauren Bestandteilen der Schmelze, wie beispielsweise Al₂O₃ und SiO₂ reagiert und auf diese Weise neutralisiert wird. In analoger Weise werden z.B. MgCl₂ oder CaCl₂ mit H₂O zu MgO bzw. CaO und 2 HCL umgesetzt Der gebildete Fluorwasserstoff gelangt über die Leitung 8 und eine Wasserquenche in einen Reaktor 9, wobei durch neuerliche Umsetzung mit CaO hier wiederum CaF₂ bzw. Fluss-Spat gewonnen werden kann. Der Pfanne wird Edelstahlschlacke unmittelbar über eine Rinne 10 aufgegeben, da diese Edelstahlschlacke in der Regel flüssig anfällt und lediglich die Edelstahlstäube bzw. Additive mit dem Schmelzbrenner 1 aufgeschmolzen werden müssen.

Die die Pfanne 6 verlassende, von Fluorid befreite, Schlacke gelangt über eine Leitung 11 bzw. eine Rinne in einen Induktionseisenbadreaktor 12, in welchem ein kohlenstoffhältiges Eisenbad 13 vorgelegt ist. Die flüssige Schlacke 14 wird über dem Eisenbad reduziert, wobei der auf diese Weise verbrauchte Kohlenstoffgehalt des Eisenbades durch Einblasen von Kohlenstoff und Erdgas über eine Lanze 15 ergänzt wird. Um eine Rückoxidation hier zu verhindern, kann der Kohlenstoff mit Inertgasen oder Erdgas eingestoßen werden. Um über der flüssigen Schlacke 14 eine entsprechende Temperatur zu gewährleisten, wird Heißwind über die Leitung 2 zugeführt, wobei bei Heißwindtemperaturen von 1100°C bis 1200°C Verbrennungstemperaturen bis etwa 2000°C erzielt werden können, und wobei dieser Heißwind oder Heißwindsauerstoffgemische durch eine entsprechende Verfahrensführung, abhängig von der Menge an Zusatzbrennstoff und Sauerstoff, im Einschmelzreaktor 1 hohe Mengen an CO und nur geringe Mengen an CO₂ enthält. Das auf diese Weise in den Induktionseisenbadreaktor eingebrachte, in hohem Ausmaße CO hältige Gas sowie das bei der Reduktion aus dem kohlenstoffhältigen Eisenbad gebildete CO, wird in der Folge zur Erhöhung der Temperatur nachverbrannt, wofür über eine Lanze 16 Sauerstoff eingeblasen wird. Die Nachverbrennung wird hierbei so geführt, dass die Partialdrücke temperaturabhängig 15% des Gesamtdruckes bei 1500°C und 20% des Gesamtdruckes bei 1800°C nicht übersteigen.

Die Schlacke bzw. die gebildete Vorlegierung wird gesondert abgestochen, wobei die Schlacke über die Leitung 17 unmittelbar einem Granulator 18 zugeführt werden kann. Anstelle eines Granulators 18 kann auch eine entsprechende Zerstäubung zu kleinsten Partikeln vorgenommen werden, wodurch unmittelbar Zement bzw. zementartige Produkte erzielt werden. Die Eisenbadlegierung enthält neben Eisen, Chrom, Nickel und Kohlenstoff und kann als Vorlegierung bei der Edelstahlherstellung neuerlich Verwendung finden.

## Patentansprüche

1. Verfahren zum Aufbereiten von Schlacken und Stäuben aus der Edelstahlherstellung zu hydraulisch aktiven Zementzuschlagstoffen und Vorlegierungen zur Edelstahlerzeugung, bei welchem die schmelzflüssigen Schlacken und Stäube bei Temperaturen zwischen 1500° C und 1800° C über einem kohlenstoffhältigen Eisenbad reduziert werden, **dadurch gekennzeichnet, dass** der CO₂-Partialdruck über dem Bad kontrolliert wird und unter einem temperaturabhängigen Maximalwert gehalten wird, wobei der CO₂-Partialdruck-Maximalwert 15% des Gesamtdruckes bei 1500° C und 20% des Gesamtdruckes bei 1800° C nicht übersteigen soll.

2. Verfahren nach Anspruch 1, **dadurch gekennzeichnet, dass** das kohlenstoffhältige Fe-Bad induktiv beheizt wird und im Gasraum eine Nachverbrennung des gebildeten CO zu CO₂ unter Berücksichtigung der maximalen CO₂-Partialdrücke vorgenommen wird.

3. Verfahren nach Anspruch 1 oder 2, **dadurch gekennzeichnet, dass** die Basizität (CaO/SiO₂) der gebildeten Schlacke durch SiO₂-Zusatz auf Werte zwischen 1 und 1,6 und der Al₂O₃-Gehalt auf Werte nach der Reduktion zwischen 6 und 18 Gew.% eingestellt wird.

4. Verfahren nach Anspruch 1, 2 oder 3, **dadurch gekennzeichnet, dass** der MgO-Gehalt der Schlacken nach der Reduktion unter 20 Gew.%, der TiO₂-Gehalt unter 2 Gew.% und der FexOy-Gehalt unter 2 Gew.% gehalten wird.

5. Verfahren nach einem der Ansprüche 1 bis 4, **dadurch gekennzeichnet, dass** der Gehalt an Schwermetallen in der Schlacke nach der Reduktion unter 800 ppm gehalten wird.

6. Verfahren nach einem der Ansprüche 1 bis 5, **dadurch gekennzeichnet, dass** halogenidhältige Schmelzen durch Aufblasen oder Einblasen von Wasserdampf oder wasserstoffhältigen Brennstoffen und Verbrennungssauerstoff zur Bildung von Halogenwasserstoff umgesetzt werden, wobei intermediär gebildete Oxide, wie z.B. CaO oder MgO, mit sauren Bestandteilen der Schlacke wie A₂O₃ oder SiO₂ neutralisiert wird.

## Claims

1. A method for processing slags and dusts from stainless steelmaking to hydraulically active cement aggregates and pre-alloys for stainless steelmaking, in which the molten slags and dusts are reduced above a carbon-containing iron bath at temperatures ranging between 1500°C and 1800°C, **characterized in that** the CO₂ partial pressure above the bath is monitored and maintained below a temperature-dependent maximum value, whereby the maximum value of the CO₂ partial pressure is not to exceed 15% of the overall pressure at 1500°C and 20% of the overall pressure at 1800°C.

2. A method according to claim 1, **characterized in that** the carbon-containing Fe-bath is inductively heated and a post-combustion of the formed CO to CO₂ is effected in the gas space under consideration of the maximum CO₂ partial pressures.

3. A method according to claim 1 or 2, **characterized in that** the basicity (CaO/SiO₂) of the formed slag by the addition of SiO₂ is adjusted to values ranging between 1 and 1.6 and the Al₂O₃ content is adjusted to values after reduction ranging between 6 and 18% by weight.

4. A method according to claim 1, 2 or 3, **characterized in that** the MgO-content of the slags after reduction is maintained below 20% by weight, the TiO₂-content is maintained below 2% by weight and the FeₓO_{y}-content is maintained below 2% by weight.

5. A method according to any one of claims 1 to 4, **characterized in that** the content of heavy metals in the slag after reduction is maintained below 800 ppm.

6. A method according to any one of claims 1 to 5, **characterized in that** the halide-containing melts are reacted to form hydrogen halides by top-blowing, or blowing in, water vapour or hydrogencontaining fuels and combustion oxygen, whereby intermediately formed oxides such as, e.g., CaO or MgO are neutralized by the acidic components of the slag such as A₂O₃ or SiO₂.

## Revendications

1. Procédé de récupération de scories et poussières provenant de l'élaboration des aciers inoxydables pour obtenir des agrégats de ciment hydrauliquement actifs et des précurseurs d'alliages pour l'obtention d'aciers inoxydables, dans lequel on réduit les scories et poussières à l'état liquide fondu à une température entre 1 500 °C et 1 800 °C sur un bain de fer contenant du carbone, **caractérisé en ce que** la pression partielle de CO₂ au-dessus du bain est contrôlée et est maintenue au-dessous d'une valeur maximale fonction de la température, la valeur maximale de la pression partielle ne devant pas dépasser 15 % de la pression totale à 1 500 °C et 20 % de la pression totale à 1 800 °C.

2. Procédé selon la revendication 1, **caractérisé en ce que** l'on chauffe par induction le bain de Fe contenant du carbone et on effectue dans la chambre des gaz une post-combustion du CO formé en CO₂ en prenant en considération les pressions partielles maximales de CO₂.

3. Procédé selon la revendication 1 ou 2, **caractérisé en ce que** la basicité (CaO/SiO₂) des scories formés est ajustée par ajout de SiO₂ en des teneurs compris 1 entre 1,6 et de Al₂O₃ en des teneurs compris 6 entre 18 % en poids après la réduction.

4. Procédé selon la revendication 1, 2 ou 3, **caractérisé en ce que** la teneur en MgO des scories après la réduction est maintenue à moins de 20 % en poids, la teneur en TiO₂ à moins de 2 % en poids et la teneur en FeₓO_{y} à moins de 2 % en poids.

5. Procédé selon l'une des revendications 1 à 4, **caractérisé en ce que** la teneur en métaux lourds dans le scorie est maintenue à moins de 800 ppm après la réduction.

6. Procédé selon l'une des revendications 1 à 5, **caractérisé en ce que** l'on fait réagir la fonte contenant des halogènes par insufflation ou barbotage de vapeur d'eau ou de combustibles contenant de l'hydrogène et d'oxygène de combustion en formant des halogénures d'hydrogène, dans lequel les oxydes intermédiaires formés, comme par exemple CaO ou MgO, sont neutralisés par les constituants acides du scorie comme Al₂O₃ ou SiO₂.
